# EUROPEAN PATENT APPLICATION

(11) **EP 2 698 563 A1**
(43) Date of publication of application: **19.02.2014**
(21) Application number: 12771243.8
(22) Date of filing: 17.02.2012
(51) Int. Cl.: F16H 7/12

(54) **TENSIONER**

(30) Priority: 15.04.2011 JP 2011091324
(71) Applicant: Bando Chemical Industries, Ltd., Kobe-shi, Hyogo 650-0047 (JP)
(72) Inventor: JINDAI, Saki, Kobe-shi, Hyogo 650-0047 (JP); FUKUDA, Koji, Kobe-shi, Hyogo 650-0047 (JP)
(74) Representative: advotec.
(86) International application number: PCT/JP2012/001067
(87) International publication number: WO 2012/140817

(57) **Abstract**

A tensioner includes a movable member, a fixed member, biasing means provided between the fixed member and the movable member and configured to bias the movable member along a pressing direction, and a damping member provided between the fixed member and the movable member and configured to damp the pivoting movement of the movable member. The damping member is made of a resin composition whose sliding friction force damps the pivoting movement of the movable member, and a contact angle between the resin composition and water is 70° to 100°, both inclusive.

## Description

### TECHNICAL FIELD

The technology disclosed in this specification relates to tensioners imparting predetermined tension to a belt by pressing a pulley against the belt.

### BACKGROUND ART

Conventionally, tensioners have been known which impart predetermined tension to, e.g., V belts for driving auxiliary machines of automobile engines, and which are configured to change a damping force in an operation of adjusting the tension in response to the change of the tension (for example, see Patent Documents 1-3). The tensioner includes a fixed member fixed to an automobile engine, a pivot member pivotably supported by the fixed member, and biasing means provided between the fixed member and the pivot member and biasing the pivot member. The pulley pressed against a belt is rotatably supported by the pivot member, and the biasing means is configured to bias the pivot member along a pressing direction in which the pulley presses against the belt. In this way, the damping member is provided between the fixed member and the pivot member to damp the pivot movement of the pivot member. In the tensioners disclosed in Patent Documents 1-3, the damping member is made of a synthetic resin whose sliding friction force provides damping.

### CITATION LIST

### PATENT DOCUMENT

PATENT DOCUMENT 1: Japanese Unexamined Patent Publication No. H08-42650
PATENT DOCUMENT 2: Japanese Unexamined Patent Publication No. 2002-310247
PATENT DOCUMENT 3: Japanese Unexamined Patent Publication No. 2009-270666

### SUMMARY OF THE INVENTION

### TECHNICAL PROBLEM

The damping member is made of the above-described synthetic resin whose sliding friction force provides damping, and therefore, it is required to have excellent slidability and wear resistance properties. Conventionally, a resin composition including a polyamide resin, such as a polyamide 46 resin and a polyamide 66 resin, as a base resin is used for a synthetic resin damping member.

The tensioner used for the above-described belt systems for driving auxiliary machines of the engine is mounted on the outer portion of the engine, and therefore, is covered with, e.g., a hood of the vehicle, a wheel house, and an engine under cover, but is not completely sealed. Therefore, under a rigorous driving environment, when the tensioner is immersed in water, the water may enter the inside of the tensioner. According to the study of the present inventors, the entry of water inside the tensioner may greatly change the damping force of the tensioner.

The technology disclosed in this specification has been developed in view of the above problem, it is an object of the technology disclosed in this specification to reduce the change in damping performance when a tensioner is immersed in water.

### SOLUTION TO THE PROBLEM

For example, Patent Document 2 discloses forming a damping member by a resin composition including a polyphenylene sulfide resin as a base resin. This formation prevents an increase in friction force of the tensioner of Patent Document 2 when the tensioner is immersed in water. However, through the study of the present inventors, they have found that the polyphenylene sulfide resin has a high coefficient of kinetic friction, and when a friction wear test was performed relative to the resin composition including the polyphenylene sulfide resin as a base resin, ruins of heat occur on the sliding surface (frictioned surface). Therefore, the polyphenylene sulfide resin is not suitable as the base resin of the resin composition forming the damping member of the tensioner.

The present inventors have studied the cause of the change in damping performance when the tensioner is immersed in water to select a new resin composition. As a result, they have found that the change in the damping performance is caused by (1) the change in clearance amount of a sliding portion along with the change in size of the damping member due to absorption of water by the damping member made of a synthetic resin, and (2) the change in friction coefficient of the damping member made of the synthetic resin due to water absorption. Focused on preventing the cause (2) the change in friction coefficient, the technology disclosed in this specification has been developed.

Specifically, the technology disclosed in this specification is directed to a tensioner imparting predetermined tension to a belt by pressing a pulley against the belt. The tensioner includes: a movable member rotatably supporting the pulley; a fixed member fixed to a fixed body, and pivotably supporting the movable member along a pressing direction in which the pulley presses the belt; biasing means provided between the fixed member and the movable member, and configured to bias the movable member along the pressing direction; and a damping member provided between the fixed member and the movable member, and configured to damp a pivoting movement of the movable member. The damping member is made of a resin composition whose sliding friction force damps the pivoting movement of the movable member. A contact angle between the resin composition and water is 70° to 100°, both inclusive.

According to the configuration, the contact angle between the resin composition and water is 70° to 100°, both inclusive, whereby the surface of the resin composition is set to have relatively high water-repellency. Therefore, even if water enters into sliding portions of the damping member, more precisely, narrow gaps of the portions sliding against each other, the pivoting movement of the damping member along with the pivoting movement of the movable member immediately discharges the water entered. In other words, since the water does not substantially remain or hardly remains in the sliding portions, water absorption by the damping member is reduced, thereby avoiding or reducing the change in friction coefficient. As a result, when the tensioner is immersed in water, the change in damping performance is avoided or reduced. This can avoid the problem where the damping performance of the tensioner is changed and tension cannot be stably imparted to the belt.

Patent Document 3 discloses a tensioner including a portion of a movable member formed by performing a water-repellent treatment by electroless nickel plating using a fluorine resin onto the surface that is in slidable contact with a damping member made of a synthetic resin. The tensioner of Patent Document 3 can immediately discharge the water having entered the sliding portion by the portion formed by the water-repellent treatment, and allows the water not to substantially remain or to hardly remain in the sliding portion. In other words, the auto tensioner of Patent Document 3 is also effective to avoid or reduce the change in damping performance when it is immersed in water.

However, through the study of the present inventors, they have found that, although the tensioner of Patent Document 3 can avoid or reduce the change in the damping performance when it is immersed in water in the initial state, the change in the damping performance when it is immersed in water is increased during the duration of use. This time degradation is caused by the transfer of the synthetic resin forming the damping member. In other words, along with the sliding between the movable member including the portion formed by the water-repellent treatment and the damping member, the synthetic resin forming the damping member is gradually transferred onto the surface of the portion formed by the water-repellent treatment. In the tensioner of Patent Document 3, the damping performance is greatly changed, and it is impossible to stably maintain the damping performance for a long time.

In contrast, in the tensioner of the configuration described above, the resin composition forming the damping member has water-repellency. Therefore, even if the resin composition is transferred onto the surface of the movable member, the resin composition remains in the sliding portion, and therefore, desired water-repellency is maintained. In this way, the tensioner of the configuration can stably maintain the damping performance for a long time.

The tensioner of Patent Document 3 needs a treatment forming electroless nickel plating on the surface of the movable member, and the number of the fabrication steps is increased due to the treatment, whereas in the tensioner of the configuration, there is no such an increase in the number of the fabrication steps. Furthermore, the surface roughness of the fixed member and the surface roughness of the movable member which are in slidable contact with the sliding member need to satisfy the surface roughness defined in advance, and if electroless nickel plating is formed like the tensioner of Patent Document 3, the surface of the plated portion needs to have the defined surface roughness, thereby making the fabrication difficult. In the tensioner of the configuration, the plating treatment is not performed, and there is no such difficulty. In addition, if damage such as peeling of electroless nickel plating formed on the surface of the movable member occurs, the water-repellency of the sliding portion is also damaged. In contrast, such damage does not occur in the tensioner of the configuration, and in this regard, the water-repellency of the sliding portion can be stably maintained.

A water absorption rate of a base resin of the resin composition may be 0.7% or less. With such a feature, when the tensioner is immersed in water, the absorption of water by the damping member can be reduced. Therefore, the change in the size of the damping member or the change in the friction coefficient of the damping member along with the water absorption is reduced. This stabilizes the damping performance of the tensioner.

A base resin of the resin composition may be a modified polyamide 6T resin, a polyamide 9T resin, or a polyphthalamide resin. These resins are used as the base resin, and the resin composition satisfies the condition in which the contact angle with water is 70° to 100°, both inclusive, and it is advantageous to avoid or reduce the change in the damping performance. The resin composition including one of these resins as the base resin achieves other excellent performance, such as slidablity, wear resistance properties, that the damping member is required to have.

An amino group concentration of the base resin may be 15% or less. The relatively small amino group concentration is advantageous to reduce the water absorbency of the resin.

The resin composition may include a fluorine-based sliding assisting agent from 3 to 20 weight percent (wt%), and a fibrous reinforcing material from 3 to 10 weight percent (wt%).

Such a feature achieves a tensioner including a damping member that is excellent in slidability and wear resistance properties, and that avoids or reduces the change in the damping performance when the tensioner is immersed in water.

### ADVANTAGES OF THE INVENTION

As described above, in the tensioner, a contact angle between the resin composition forming the damping member and water is set to 70° to 100°, whereby, even if water enters a sliding portion of the damping member, the water is immediately discharged to be able to avoid or reduce the change in the damping performance due to the change in friction coefficient. Even if the resin composition is transferred in the sliding portion, the advantage of avoiding or reducing the change in the damping performance is maintained. As a result, a problem where tension cannot be stably imparted to the belt due to the change in the damping performance in the tensioner can be stably avoided for a long time.

### BRIEF DESCRIPTION OF THE DRAWINGS

[FIG. 1] FIG. 1 is a disassembled perspective view of illustrating a tensioner.
[FIG. 2] FIG. 2 is a diagram showing a relationship between a water absorption rate and a contact angle according to examples.
[FIG. 3] FIG. 3 is an illustration of a method of an evaluation test using a friction wear test device.
[FIG. 4] FIG. 4 is a diagram illustrating a torque change before and after water is poured into a test piece in the evaluation test.
[FIG. 5] FIG. 5 is a diagram showing a relationship between a water contact angle and an amount of increase in friction force according to the examples.
[FIG. 6] FIG. 6 is a diagram showing amounts of increase in the friction force in cases with/without a plating treatment and before/after durability test.

### DESCRIPTION OF EMBODIMENTS

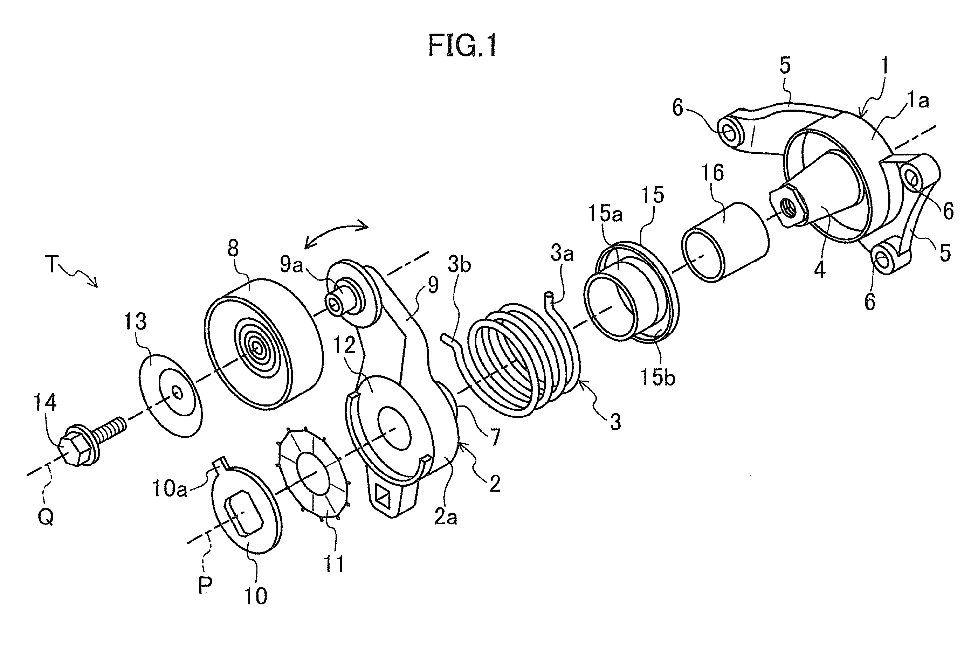

An embodiment of a tensioner will be described below with reference to the drawings. The following preferred embodiment will be described merely as an example. FIG. 1 illustrates a general configuration of a tensioner T. The tensioner T includes a fixed member 1 made of an aluminum alloy and fixable to a fixed body such as an automobile engine, a pivot member 2 made of an aluminum alloy and assembled to the fixed member 1 to be pivotably supported around a pivot axis center P, and a torsion coil spring 3 compressed between the fixed member 1 and the pivot member 2 and serving as biasing means pivotally biasing the pivot member 2 relative to the fixed member 1 along a predetermined direction (the counterclockwise direction in the example of FIG. 1).

The fixed member 1 has a rear cup portion 1a formed in the shape of a closed-end cylinder and having an opening in a portion closer to the end of the fixed member 1 (bottom left side of FIG. 1), an axis portion 4 extending from the center of the bottom wall of the rear cup portion 1a along the direction of the pivot axis center P, and two attachment portions 5 radially outwardly extending in the outer periphery of the rear cup portion 1a. The fixed member 1 is fixed to the fixed body by attachment bolts, which are not illustrated, in three bolt insertion holes 6 provided in the attachment portions 5. A base end side locking hole, which is not illustrated, is formed in the peripheral wall of the rear cup portion 1a to radially pass through the peripheral wall.

The pivot member 2 has a front cup portion 2a having an opening in a portion closer to the base end of the fixed member 1 (upper right side of FIG. 1) such that the opening faces the opening of the rear cup portion 1a, a boss portion 7 extending from the center of the bottom wall of the front cup portion 2a along the pivot axis center P direction, and fitting with the outer periphery of the axis portion 4 of the fixed member 1 from the end side, and an arm portion 9 radially outwardly protruding in the outer periphery of the front cup portion 2a, the arm portion 9 having a protruding portion in which a pulley 8 is rotatably supported around an axis center Q parallel to the pivot axis center P of the boss portion 7. The pivot member 2 is pivotably supported by the fixed member 1 in the boss portion 7, and a front plate 10 made of a metal plate formed in the shape of a substantially circular and attached to the end of the axis portion 4 of the fixed member 1 prevents the pivot member 2 from coming off through a thrust washer 11 made of a synthetic resin. The front plate 10 is provided with a restriction piece 10a protruding radially outwardly, and the restriction piece 10a is engaged with a notch 12 formed by cutting out a portion of the outer peripheral wall of the front cup portion 2a at the bottom side thereof to restrict the range of the pivoting movement of the pivot member 2. An axis portion 9a is provided to protrude from the protruding portion of the arm portion 9 along the direction of the axis center Q to axially support the pulley 8, and the pulley 8 is prevented from coming off by a pulley bolt 14 through a dust shield 13. An end side locking hole, which is not illustrated, is formed in the peripheral wall of the front cup portion 2a to radially pass through the peripheral wall.

The torsion coil spring 3 is formed so as to have a body wound counterclockwise and a base end 3a and an end 3b which protrude radially outwardly from the body. The base end 3a radially passes through the base end side locking hole in the peripheral wall of the rear cup portion 1a to be locked, and the end 3b radially passes through an end side locking hole in the peripheral wall of the front cup portion 2a of the pivot member 2 to be locked. This restricts movement of the base end 3a and the end 3b along the peripheral direction. The body moves along a direction in which the body expands its diameter while the base end 3a and the end 3b are locked, thereby pivotally biasing the pivot member 2 along a predetermined direction (the counterclockwise direction in FIG. 1).

A spring support 15 serving as the damping member is provided in the outer peripheral side of the boss portion 7 of the pivot member 2. The spring support 15 is formed in the shape of a cylinder with a collar as a whole, and the inner peripheral surface of a cylindrical body 15a is slidable to the outer peripheral surface of the boss portion 7. A collar 15b formed in a shape of an outward flange is provided in the rim of the opening edge of the body 15a closer to the base end to contact the inner surface of the bottom wall of the rear cup portion 1a. The collar 15b is pressed onto the inner surface of the bottom wall of the rear cup portion 1a by a compressive biasing force of the torsion coil spring 3, whereby the spring support 15 is fixed to the side closer to the fixed member 1.

An insert bearing 16 serving as the damping member is provided between the inner periphery of the boss portion 7 of the pivot member 2 and the outer periphery of the axis portion 4 of the fixed member 1. The insert bearing 16 is formed in a shape of a cylinder with both ends opened. The outer peripheral surface of the insert bearing 16 and the inner peripheral surface of the boss portion 7 of the pivot member 2 have a tapered shape in cross section such that a portion closer to the end has a diameter slightly smaller than that of a portion closer to the base end in each of the surfaces. Furthermore, the inner peripheral surface of the insert bearing 16 and the outer peripheral surface of the axis portion 4 of the fixed member 1 have a tapered shape in cross section such that a portion closer to the end has a diameter slightly smaller than that of a portion closer to the base end in each of the surfaces. The outer periphery of the axis portion 4 is provided with a key groove, which is not illustrated, extending along the direction of the pivot axis center P, and the inner periphery of the insert bearing 16 is provided with a key portion inserted into the key groove, and this configuration prevents the rotating movement of the insert bearing 16 at the side closer to the fixed member 1.

The tensioner T having the configuration as described above is used for a mechanism for driving auxiliary machines of an automobile engine. The tensioner T is used to impart tension to a V-ribbed belt, which is not illustrated, wrapped between a drive pulley coupled to a crankshaft of the engine to rotate together with the crankshaft, and a plurality of driven pulleys for driving auxiliary machines, such as a power steering apparatus, an alternator, an air conditioner, and traveling along a predetermined direction. In the tensioner T, along with the tension change of the belt wrapped around the pulley 8 of the pivot member 2, the body 15a of the spring support 15 is pressed onto the boss portion 7 of the pivot member 2 by a radially inwardly pressing force of the torsion coil spring 3, causing a friction force between a portion of the inner peripheral surface of the body 15a and a portion of the outer peripheral surface of the boss portion 7 (thus, the sliding portion). The boss portion 7 of the pivot member 2 is pressed onto the insert bearing 16 by the above pressing force, causing a friction force between a portion of the inner peripheral surface of the boss portion 7 of the pivot member 2 and a portion of the outer peripheral surface of the insert bearing 16 (thus, the sliding portion). This sliding friction force damps the pivoting movement of the pivot member 2. When the pivot member 2 pivots, the friction force damping the pivoting movement is larger than the friction force when the pivot member 2 pivots along a direction biasing the pivoting movement, and therefore, if the belt tension is greatly increased, the pivoting movement of the pivot member 2 is prevented, thereby preventing flapping of the belt.

The tensioner T is characterized in that the spring support 15 and the insert bearing 16 (hereinafter, they may be generically called damping members) are made of a resin composition forming a contact angle of 70° to 100°, both inclusive, with water. The tensioner T installed inside an engine room may be immersed in water during it is used. However, when the contact angle between water and the resin composition forming the damping member is made relatively higher, the change in damping performance before and after the immersion in water is avoided or reduced to contribute to stabilization of the damping performance of the tensioner T, as described later. The base resin of the resin composition may be, e.g., semi-aromatic nylon, and specifically, may be a modified polyamide 6T resin, a polyamide 9T resin, or, a polyphthalamide resin. Using such synthetic resins as the base resin is advantageous to set the contact angle of the resin composition to 70° or more, and this allows the surface of the damping member to have relatively high water-repellency. From the viewpoint of the damping performance, the contact angle is preferably high, and has no specific upper limit. From the viewpoint of an actual resin composition that can be used for the tensioner T, the upper limit of the contact angle may be set to 100°. Furthermore, from the viewpoint of possibility in view of required performance except the damping performance, the contact angle may be set to less than 93.5°.

The water absorption rate of the base resin is set to 0.7% or less. The lower water absorption rate can reduce or prevent the change in the size of the damping member when the immersion in water, and can also reduce or prevent the change in the friction coefficient. This also contributes to stabilization of the damping performance, and the damping performance of the tensioner T is further stable. The concentration of the amino group of the base resin is set to 15% or less. The lower concentration of the amino group is advantageous to reduce the water absorption rate of the base resin.

The resin composition forming the damping member includes a fluorine-based sliding assisting agent from 3 to 20 wt%, a fibrous reinforcing material from 3 to 10 wt%, and an olefin-based resin from 1 to 10wt%. The fluorine-based sliding assisting agent may be, e.g., but is not limited to, polytetrafluoroethylene (PTFE). Blending the fluorine-based sliding assisting agent improves slidability of the damping member. The fibrous reinforcing material may be specifically, but is not limited to, aramid fiber. Blending the fibrous reinforcing material improves wear resistance properties of the damping member. The olefin-based resin may be, e.g., but is not limited to, high-density polyethylene (HDPE). Blending the olefin-based resin is advantageous to form a hydrophobic surface, increases a contact angle between the surface of the damping member and water, and reduces water absorbency of the damping member.

The damping member, thus, the resin composition forming the spring support 15 and the insert bearing 16 includes the elements described above, and because of these elements, when the tensioner T is immersed in water, even if the water enters between the inner peripheral surface of the body 15a of the spring support 15 and the outer peripheral surface of the boss portion 7 of the pivot member 2, and between the inner peripheral surface of the boss portion 7 and the outer peripheral surface of the insert bearing 16, surfaces of the spring support 15 and the insert bearing 16 have relatively high water-repellency, and therefore, the water entered is immediately discharged along with the pivoting movement of the pivot member 2.

Therefore, the water does not substantially remain or hardly remains in the sliding portion of the damping member described above, and the damping member does not absorb the water having entered the sliding portion. As a result, the change in the friction coefficient is avoided or reduced. This avoids or reduces the change in damping performance before and after the immersion in water, precisely, the reduction in the damping performance.

This also reduces water absorption by the spring support 15 and the insert bearing 16 when the immersion in water. This reduction also reduces the change in the sizes of the spring support 15 and the insert bearing 16, thus, the change in the clearance amount of the sliding portion, and the change in the damping performance due to the water absorption.

In this way, the change in the damping performance is avoided since the two causes that cause the change in the damping performance when the tensioner T is immersed in water, thus, the causes of (1) the change in clearance amount of the sliding portion along with the change in size of the damping member due to water absorption by the damping member made of a synthetic resin, and (2) the change in friction coefficient of the damping member made of the synthetic resin due to absorption of water are avoided. As a result, in a belt system for driving auxiliary machines of an engine, it is possible to avoid the problem where the damping performance of the tensioner T is changed and tension cannot be stably imparted to the belt.

The damping member made of the synthetic resin has high water-repellency, and therefore, even if the synthetic resin is transferred to the outer peripheral surface and the inner peripheral surface of the boss portion 7 of the pivot member 2 along with the use of the tensioner T, the synthetic resin having water-repellency remains in the sliding portion, and the water-repellency of the sliding portion can be maintained, which will be specifically described later. As a result, the damping performance of the tensioner T can be stably maintained for a long time.

In the concentration described above, both the spring support 15 and the insert bearing 16 serving as the damping member are made of the specific resin composition disclosed herein. Either one of the spring support 15 or the insert bearing 16 may be made of the specific resin composition.

Configurations of tensioners to which the technology disclosed in this specification is applicable are not limited to the configuration illustrated in FIG. 1. The technology disclosed in this specification is applicable to tensions having other various configurations having at least damping members by a sliding friction force.

### Examples

Next, specific examples of the resin composition forming the damping member will be described. First, a water absorption rate (%) of each resin was measured to select a base resin of the resin composition. The water absorption rate was obtained by immersing a specimen in water at a temperature of 23°C for 24 hours and measuring the weight difference before and after the immersion. Based on the measurement result and the concentration (%) of the amino group calculated from the numerator structure of each resin, resins that would be a candidate of the base resin of the resin composition were selected. The concentration of the amino group is relevant to the water absorption rate, and the lower the amino group concentration (%) is, the lower the water absorption rate is. The resins selected in the measurement were a modified polyamide 6T resin (Example 1), a polyphthalamide resin (Example 2), a polyamide 9T resin (Example 3), and a polyphenylene sulfide resin (Example 4), each resin having a water absorption rate of 0.7% or less. Each of the modified polyamide 6T resin, the polyphthalamide resin, and the polyamide 9T resin has an amino group concentration of 15% or less. Examples 1, 2, and 3 are the examples, and Example 4 is a comparative example. A polyamide 46 resin (Example 6) and a polyamide 66 resin (Example 7) are conventional examples. The polyamide 46 resin and the polyamide 66 resin have a water absorption rate higher than 0.7% and have an amino group concentration higher than 15%.

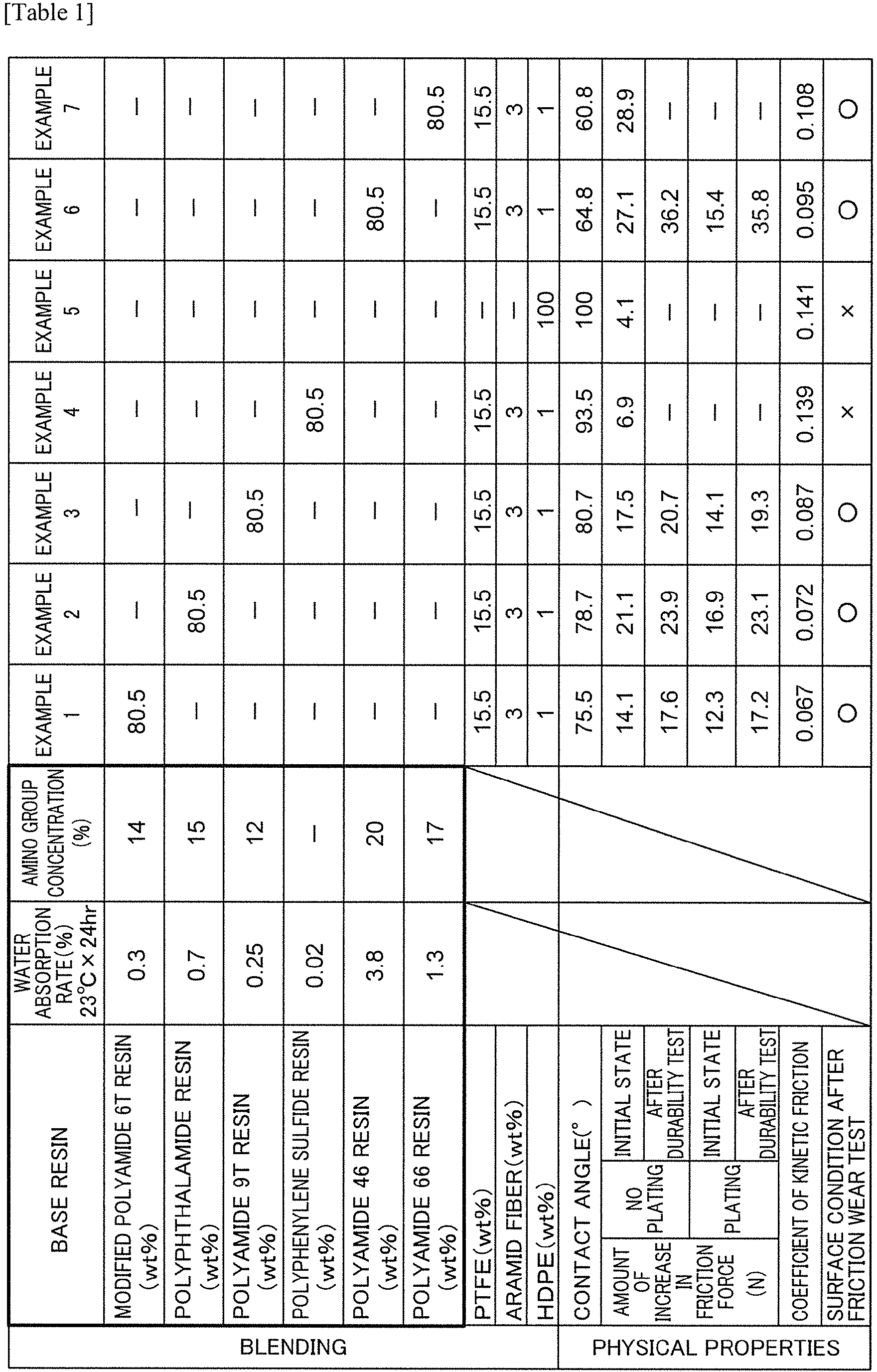

In the resin composition of each example of Examples 1-4 and Examples 6-7, the same amount of the base resin was blended (80.5 wt%), and in the resin composition of each example, the same types of substances were blended and the same amounts of the substances were blended. Specifically, as shown in Table 1, PTFE was 15.5 wt%, aramid fiber was 3 wt%, HDPE was 1wt%. HDPE was used as the other comparative example (Example 5).

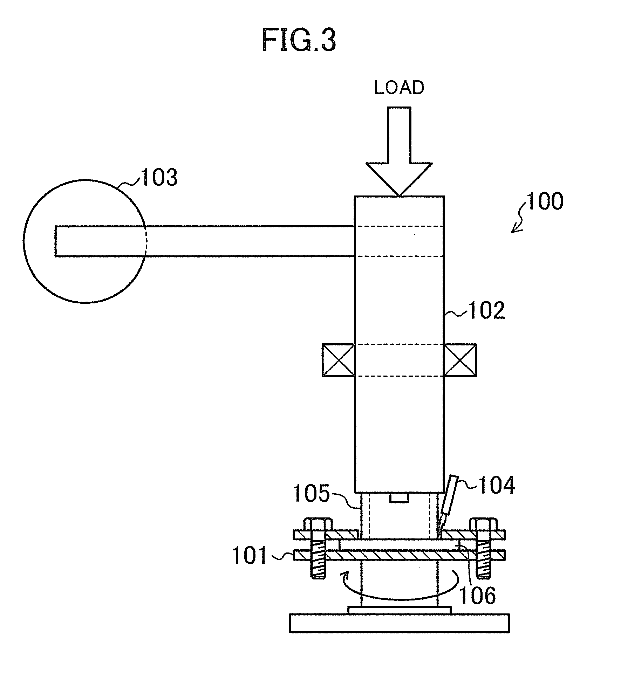

Test pieces for Suzuki type friction wear test were provided by injection molding using the resin compositions of the respective examples. The test pieces have a cylindrical shape as illustrated in FIG. 3.

### Measurement of Contact Angle

Water was dropped onto the end surface (sliding surface) of the cylindrically-shaped test piece of each example, and the contact angle of a droplet of the water on the end surface was measured by using a contact angle meter. The measurement result will be shown in Table 1. According to the result, each of the contact angles in the examples of Examples 1, 2, and 3, and the comparative examples of Examples 4 and 5 was in the range of 70° to 100°, both inclusive, which was relatively high. In contrast, the contact angles in the conventional examples of Examples 6 and 7 were respectively 64.8° and 60.8°, which were relatively small.

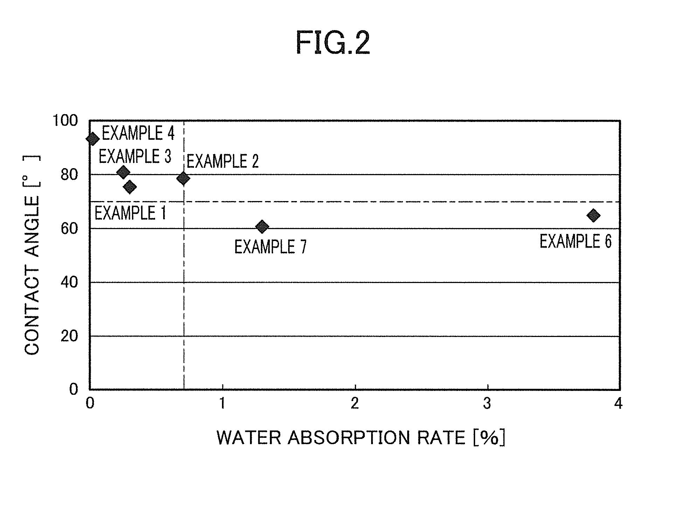

FIG. 2 shows a relationship between the water absorption rate of polyamide and the contact angle of the resin composition in each example of Examples 1-4 and Examples 6-7. According to the diagram, the larger the water absorption rate of the base resin is, the smaller the contact angle of the resin composition is, and conversely, the smaller the water absorption rate of the base resin is, the larger the contact angle of the resin composition is. Accordingly, in order to increase the contact angle of the resin composition forming the damping member, it is advantageous to reduce the water absorption rate of the base resin.

### Measurement of Change in Friction Force

Next, the change in the friction force of a test piece 105 of each example before and after pouring water into the sliding portion of the test piece was measured by using a Suzuki type friction wear test device 100 illustrated in FIG. 3. The configuration of the Suzuki type friction wear test device 100 will be briefly described. The test device 100 in which a plate-shaped test piece 106 is placed includes a rotating table 101 rotating the plate-shaped test piece 106 about the vertical axis, and a pressing axis 102 pressing the cylindrically-shaped test piece 105 placed on the plate-shaped test piece 106 against the plate-shaped test piece 106 with a predetermined load. The pressing axis 102 is supported by a bearing to be pivotable about the vertical axis, and a load cell 103 detecting a torque applied to the pressing axis 102, thus, applied to the cylindrically-shaped test piece 105, is attached to the upper end of the pressing axis 102. In other words, when the plate-shaped test piece 106 was rotated while the cylindrically-shaped test piece 105 was pressed against the plate-shaped test piece 106 with a predetermined load, the torque applied to the cylindrically-shaped test piece 105 was measured to measure the sliding friction force between the cylindrically-shaped test piece 105 and the plate-shaped test piece 106.

The plate-shaped test piece 106 was formed by performing a shot blast process with respect to the surface of a disk cut from a round bar of aluminum alloy (A2024). The load imparted to the cylindrically-shaped test piece 105 was 1600 N, and the rotational speed of the plate-shaped test piece 106 was 1 mm/sec.

In the test measuring in change of the friction force before and after pouring water, first, the plate-shaped test piece 106 was rotated for 30 seconds under the load of 1000 N at the rotational speed of 30 mm/sec in order to flatten the cylindrically-shaped test piece 105, thus, allow the sliding surface of the cylindrically-shaped test piece 105 to uniformly contact the plate-shaped test piece 106.

Then, the plate-shaped test piece 106 was rotated after the load of the test condition was changed to 1600 N and the rotational speed of the test condition was changed to 1 mm/sec. In this state, the sliding friction force between the cylindrically-shaped test piece 105 and the plate-shaped test piece 106 was measured by the load cell. The sliding friction force was a sliding friction force in a dry state that no water exists in the sliding portion between the cylindrically-shaped test piece 105 and the plate-shaped test piece 106, and that corresponds to the state before the immersion of the tensioner in water.

After the friction force was measured in the dry state, a predetermined amount of water (0.3 ml) was poured by using a syringe 104 from the side of the cylindrically-shaped test piece 105 as illustrated in FIG. 3 while the rotation of the plate-shaped test piece 106 was maintained. A sliding friction force was measured in a wet state that water enters in the sliding portion between the cylindrically-shaped test piece 105 and the plate-shaped test piece 106. This state corresponds to the state after the immersion of the tensioner in water.

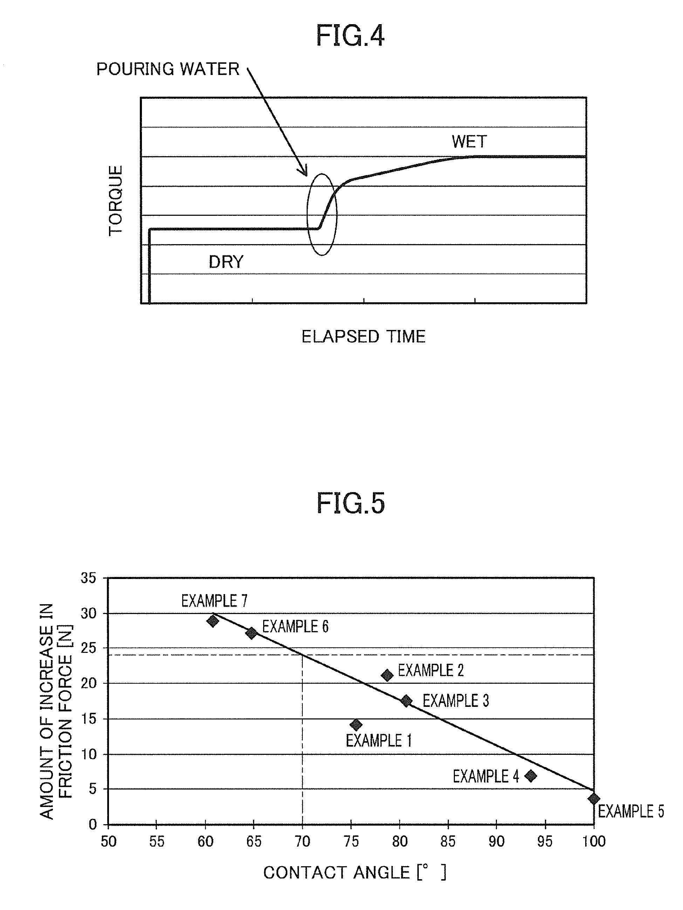

FIG. 4 shows an example of the change in torque detected by the load cell 103 before and after pouring water, thus, when the state of the sliding portion transitions from the dry state to the wet state. The torque (in other words, the sliding friction force) is relatively low in the dry state, whereas the torque (in other words, the sliding friction force) is relatively high in the wet state. Based on the amount of change in the torque before and after pouring water, the amount of increase in the sliding friction force (N), thus, the difference between the sliding friction force before pouring the water and the sliding friction force after pouring water is calculated, and this difference is considered as an evaluation index of the change in the damping performance in the tensioner before and after the immersion of the tensioner in water. The results will be shown in a field "increase amount of friction force (N), no plating, initial state" in Table 1. According to the result, the amount of increase in the friction force in Examples 1-5 is 21.1 N or less, which is relatively small, whereas the amount of increase in the friction force in Examples 6 and 7 is 27.1 N or more, which is relatively large.

FIG. 5 shows a relationship between the contact angle (°) and the amount of increase in the friction force (N) in Examples 1-7 based on values in "no plating, initial state" in the Table 1. According to the diagram, there is a correlation between the contact angle and the amount of increase in the friction force. As shown in a straight line in the diagram, the larger the contact angle is, the lower the amount of increase in the friction force is. If the contact angle is set to 70°, the amount of increase in the friction force can be 24 N or less. The value of 24 N is an effective value to reduce the change in the damping performance in the tensioner. Therefore, it is preferable to set the contact angle of the resin composition to 70° or more. The upper limit of the contact angle may be 100°.

### Measurement of Coefficient of Kinetic Friction and Observation of Condition of Sliding Surface

The friction wear test was performed in each example of Examples 1-7 by using the Suzuki type friction wear test device 100, and the coefficient of kinetic friction and the condition of the sliding surface of each of the cylindrically-shaped test pieces 105 after the test were evaluated. The result will be shown in Table 1. According to the result, the coefficient of kinetic friction is relatively low in Examples 1, 2, and 3, and along with the low coefficient of kinetic friction, the condition of the sliding surface after the friction test is excellent in these examples. In contrast, the coefficient of kinetic friction is relatively high in Examples 4 and 5, and as a result, ruins of heat occur on the sliding surface after the friction test in there examples, and the condition of the surface is poor. Therefore, if Examples 4 and 5 were applied to the damping member of the tensioner, the problem of wear resistance properties occurs.

The coefficients of kinetic friction in Examples 1, 2, and 3 are slightly lower than those in the conventional examples of Examples 6 and 7, and such lower coefficients may affect the properties of the damping member of the tensioner in Examples 1, 2, and 3 if no change was made. However, by devising other requirements such as the shape and the configuration of the damping member, the problem of the difference of such a degree in the coefficients of kinetic friction can be solved. Accordingly, Examples 1, 2, and 3 are applicable to the damping member of the tensioner.

In other words, if the damping member is made of the resin composition in each of Examples 1, 2, and 3, the change in the damping performance before and after the immersion in water can be avoided or reduced, and wear resistance properties can be sufficiently obtained while the damping performance that the tensioner is required to have is maintained.

### Result of Durability Test With/Without Water-Repellent Plating

Next, an example in which the sliding portion was subjected to a water-repellent plating treatment as disclosed in Patent Document 3 was compared to an example in which the resin composition has water-repellency.

Specifically, as the plate-shaped test piece 106, two types of test pieces were prepared, one of which was plated by electroless nickel plating onto the surface by using the fluorine resin disclosed in Patent Document 3, and the other of which was not plated. The change in the friction force of the test piece 105 of each example in Examples 1, 2, 3, and Example 6 before and after pouring the water was measured by using the Suzuki type friction wear test device 100 as stated in the "measurement of change of friction force." The measurement result will be shown in Table 1 as "plating, initial state," and "no plating, initial state." The measurement result of the test piece 106 which was not plated is the same as "the measurement of change of friction force'' as described above.

According to the measurement result, the electroless nickel plating is formed by using the fluorine resin, whereby the amount of increase in the friction force in all of Examples 1, 2, 3, and 6 is 16.9 N, which is a smaller value. Therefore, the water-repellent plating is effective in the tensioner to reduce the change in the damping performance before and after the immersion in water.

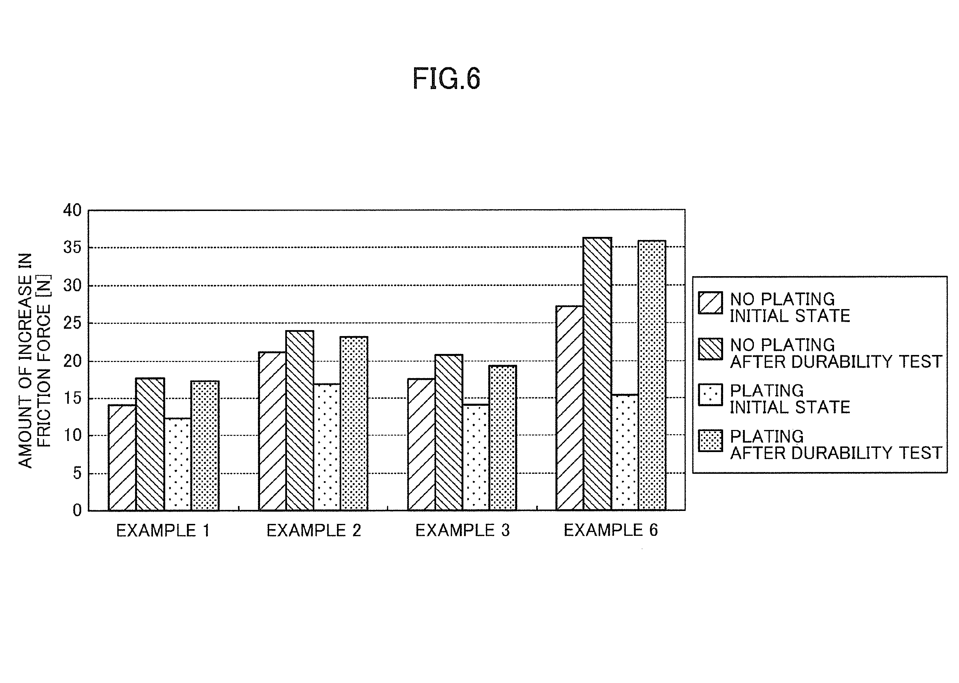

Next, a durability test was performed for 24 hours by using the Suzuki type friction wear test device 100 with respect to the combinations among the test pieces 105 of respective examples in Examples 1, 2, and 3, the plated test piece 106, and the non-plated test piece 106, and after the durability test, the change in the friction force before and after pouring water was measured in the same manner as in the above test. The measurement result will be shown in Table 1 as "plating, after the durability test," and "no plating, after the durability test." FIG. 6 shows the amount of increase in the friction force in each example, i.e., "no plating, initial state," "no plating, after durability test," "plating, initial state," and "plating, after durability test" in Examples 1, 2, 3, and 6,

As clearly shown in FIG. 6, in the conventional example of Example 6, when the plating is not performed, a relatively large amount of increase in the friction force from a state before pouring water to a state after pouring water is obtained (27.1 N) in the initial state, and a larger amount of increase in the friction force from a state before pouring water to a state after pouring water is obtained (36.2 N) after the durability test. In the conventional example of Example 6, when the plating is performed, a small amount of increase in the friction force from a state before pouring water to a state after pouring water is obtained (15.4 N) in the initial state, while a significantly large amount of increase in the friction force from a state before pouring water to a state after pouring water is obtained (35.8N) after the durability test, and is similar to the case when the plating is not performed. From the result, in the conventional example of Example 6, the water-repellency of the plating cannot be obtained after the durability test. When the surface of the plated test piece 106 after the durability test was observed, it was confirmed that the resin of the test piece 105 was transferred. Therefore, when the damping member is made of the resin composition having low water-repellency, the resin composition is transferred with time even if a water-repellent plating is formed on the sliding portion, resulting in the loss of the water-repellency of the sliding portion. In other words, it is difficult to stably maintain a desired damping performance of the tensioner disclosed in Patent Document 3 for a long time.

In contrast, in the respective examples of Examples 1, 2, and 3, when the plating is not performed, a relatively small amount of increase in the friction force from a state before pouring water to a state after pouring water is obtained (21.1 N) in the initial state, and a relatively small amount of increase in the friction force from a state before pouring water to a state after pouring water is still obtained (23.9 N or less) even after the durability test. The similar tendency is also observed in the respective examples of Examples 1, 2, and 3 even when the plating is performed. Specifically, a relatively small amount of increase in the friction force from a state before pouring water to a state after pouring water is obtained (16.9 N) in the initial state, and a relatively small amount of increase in the friction force from a state before pouring water to a state after pouring water is still obtained (23.9 N or less) even after the durability test.

Therefore, like the respective examples of Examples 1, 2, and 3, the resin composition has water-repellency, whereby the small amount of increase in the friction force from a state before pouring water to a state after pouring water is maintained not only in the initial state but also after the durability test regardless of the water-repellent plating. This means that the damping performance of the tensioner is stably maintained for a long time when the damping member is formed by the resin composition of Examples 1, 2, and 3.

In the tensioner, forming the damping member by one of the resin compositions of Examples 1, 2, and 3 may be combined with forming an electroless nickel plating by using the fluorine resin on the surface of the pivot member.

A resin composition including one of various copolymers or polymers alloys of the modified polyamide 6T resin as a base resin, which is not described as an example, can also be a resin composition for forming the damping member of the tensioner since they can obtain characteristics similar to the resin composition of Example 1 described above regarding a contact angle, an amount of increase in friction force, a coefficient of kinetic friction, and wear resistance properties.

### INDUSTRIAL APPLICABILITY

As described above, in the tensioner disclosed in this specification, the change in the damping performance when the tensioner is immersed in water can be reduced for a long time, and therefore, the tensioner is useful as a tensioner used for, particularly, a belt system for driving auxiliary machines of engines under the environment of immersion in water.

### DESCRIPTION OF REFERENCE CHARACTERS

- 1: fixed member
- 15: spring support (damping member)
- 16: insert bearing (damping member)
- 2: pivot member (movable member)
- 3: torsion coil spring (biasing means)
- 8: pulley
- T: tensioner

## Claims

1. A tensioner which imparts predetermined tension to a belt by pressing a pulley against the belt, the tensioner comprising:
a movable member rotatably supporting the pulley;
a fixed member fixed to a fixed body, and pivotably supporting the movable member along a pressing direction in which the pulley presses the belt;
biasing means provided between the fixed member and the movable member, and configured to bias the movable member along the pressing direction; and
a damping member provided between the fixed member and the movable member, and configured to damp a pivoting movement of the movable member, wherein
the damping member is made of a resin composition whose sliding friction force damps the pivoting movement of the movable member, and
a contact angle between the resin composition and water is 70° to 100°, both inclusive.

2. The tensioner of claim 1, wherein
a water absorption rate of a base resin of the resin composition is 0.7% or less.

3. The tensioner of claim 1 or 2, wherein,
a base resin of the resin composition is a modified polyamide 6T resin, a polyamide 9T resin, or a polyphthalamide resin.

4. The tensioner of claim 3, wherein
an amino group concentration of the base resin is 15% or less.

5. The tensioner of any one of claims 1-4,
the resin composition includes a fluorine-based sliding assisting agent from 3 to 20 weight percent (wt%), and a fibrous reinforcing material from 3 to 10 weight percent (wt%).
